# EUROPÄISCHE PATENTSCHRIFT

(11) **EP 3 275 682 B1**
(45) Veröffentlichungstag und Bekanntmachung des Hinweises auf die Patenterteilung: **16.09.2020**
(21) Anmeldenummer: 17001287.6
(22) Anmeldetag: 26.07.2017
(51) Int. Cl.: B42D 25/23, B42D 25/30, B42D 25/45, B29C 48/08, B29C 48/30, B29C 48/16

(54) **DATENTRÄGERKARTE MIT COEXTRUDIERTER STREIFENFOLIE**
DATA STORAGE CARRIER CARD WITH COEXTRUDED STRIP FILM
CARTES SUPPORT DE DONNÉES DOTÉES D'UNE FEUILLE À BANDE COEXTRUDÉE

(30) Priorität: 29.07.2016 DE 102016009261
(43) Veröffentlichungstag der Anmeldung: 31.01.2018
(73) Patentinhaber: Giesecke+Devrient Mobile Security GmbH, 81677 München (DE)
(72) Erfinder: Riedl, Josef, 85395 Attenkirchen (DE)

(56) Entgegenhaltungen:
- WO-A1-2014/134418
- WO-A2-2009/153056
- DE-A1-102009 058 803
- US-A1- 2011 268 906
- US-A1- 2012 263 906

## Beschreibung

Die vorliegende Erfindung ist gerichtet auf eine Datenträgerkarte mit einer coextrudierten Streifenfolie, welche es ermöglicht, mit einfachem technischem Aufwand ein Sicherheitsmerkmal in der Datenträgerkarte vorzusehen. Ferner ist die vorliegende Erfindung gerichtet auf ein entsprechend eingerichtetes Werkzeug zum Herstellen einer solchen Datenträgerkarte mitsamt einem entsprechenden Verfahren zur Herstellung der Datenträgerkarte. Ferner ist ein Computerprogrammprodukt vorgesehen, welches Steuerbefehle aufweist, welche die vorgeschlagenen Verfahren implementieren bzw. die vorgeschlagenen Vorrichtungen betreiben.

WO 2013/013736 A1 zeigt einen Datenträger bzw. eine Datenträgerkarte umfassend einen Kartenkörper mitsamt einem integrierten Sicherheitsfaden. Ferner sind zwei nebeneinanderliegende Streifen vorgesehen, wobei jedoch einer davon ein Fadenstreifen ist.

DE 10 2010 053 640 A1 zeigt einen mehrschichtigen Datenträger, der mindestens eine einstückig coextrudierte, aus übereinander liegenden unterschiedlichen Materialien bestehende Streifenfolie aufweist. Hierbei ist ein Material weicher als das andere. Das weiche Material bildet einen Randbereich des Datenträgers, wobei die weitere Folie höchstens einen Teil dieses Randbereiches bedeckt.

WO 2009/153056 A2 zeigt eine Datenträgerkarte, umfassend einen Kartenkörper aus einer oder mehreren Folien, wobei zumindest zwei Bereiche mit unterschiedlichen Materialeigenschaften vorgesehen sind. Ferner ist gemäß dieser Druckschrift vorgesehen, dass zumindest ein Teil der Übergänge zwischen zwei benachbarten Bereichen scharf und/oder fließend ausgeführt sind. Ferner ist vorgesehen, dass wenigstens ein Bereich transparent ist und der andere nicht komplett transparent, sondern lediglich teilweise transmittierend, d. h. transluzent ausgestaltet ist. Ferner können diese Bereiche auch eingefärbt bzw. pigmentiert sein.

Das Dokument DE 10 2009 058 803 A1 betrifft eine Datenträgerkarte sowie ein Verfahren und eine Anordnung zur Herstellung einer solchen Datenträgerkarte.

Die Dokumente US 2011/268906 A1 und US 2012/263906 A1 betreffen eine Anordnung zur Coextrusion sowie einen mit der Anordnung hergestellten Artikel.

Das Dokument WO 2014/134418 A1 betrifft einen coextrudierten Film mit mehreren streifenförmigen Abschnitten.

Bekannt sind sogenannte Datenträgerkarten bzw. Smartcards, welche gemäß herkömmlicher Verfahren derart hergestellt werden, dass mehrere Folienschichten übereinander angeordnet werden und diese laminiert werden. Dies kann beispielsweise mittels eines Pressens der Folien unter Temperatureinwirkung durchgeführt werden. Ferner ist es gemäß bekannter Verfahren möglich, einen Extruder zu verwenden. Hierzu ist das Verfahren der Coextrusion bekannt, das ein Zusammenführen von Kunststoffschmelzen vor einem Verlassen der Profildüse beschreibt. Hierzu werden also Kunststoffe aufgeschmolzen und derart durch einen Auslass gepresst, dass sich die Kunststoffanteile vermengen.

Bekannte Sicherheitsverfahren zur Einbringung von Sicherheitselementen in Kreditkarten oder generell Kartendatenträger haben den Nachteil, dass diese technisch aufwändig sind, da beispielsweise Sicherheitsmerkmale in einem separaten Verfahrensschritt eingebracht werden müssen. So ist es oftmals notwendig, dass gemäß bekannter Verfahren die Folienschichten aufeinander gestapelt werden müssen und zudem elektronische Bauelemente eingebracht werden müssen, wobei in einem hiervon gesonderten Verfahrensschritt Sicherheitselemente vorgesehen werden.

Somit ist es besonders nachteilig, dass nicht nur zusätzliche Verfahrensschritte notwendig sind, sondern es müssen diese Sicherheitselemente gesondert vorgehalten werden. Wird beispielsweise ein Sicherheitsfaden eingebracht, so reicht es nicht einfach aus, den Sicherheitsfaden mit einzulaminieren, sondern vielmehr muss der Sicherheitsfaden entsprechend derart ausgestaltet werden, dass er als Sicherheitsmerkmal Verwendung finden kann.

Es ist somit eine Aufgabe der vorliegenden Erfindung, eine Datenträgerkarte bereitzustellen, welche ein eindeutiges Sicherheitsmerkmal aufweist und dennoch mit geringem technischem Aufwand bereitgestellt werden kann. Es ist ferner eine Aufgabe der vorliegenden Erfindung, ein entsprechendes Verfahren zum Herstellen der Datenträgerkarte vorzuschlagen. Ferner ist es eine Aufgabe der vorliegenden Erfindung, ein Werkzeug zum Herstellen der Datenträgerkarte bereitzustellen, mitsamt einem Verfahren zum Betreiben des Werkzeugs. Ferner ist es eine Aufgabe der vorliegenden Erfindung, jeweils ein Computerprogrammprodukt bereitzustellen, welches die vorliegenden Verfahren implementiert bzw. das vorgeschlagene Werkzeug betreibt.

Die Aufgabe wird gelöst durch eine Datenträgerkarte aufweisend die Merkmale des Patentanspruchs 1. Weitere vorteilhafte Ausgestaltungen sind in den Unteransprüchen angegeben.

Demgemäß wird die in Anspruch 1 definierte Datenträgerkarte vorgeschlagen. Eine Datenträgerkarte ist beispielsweise eine Smartcard, eine Chipkarte oder einer Magnetstreifenkarte. Weiterhin sind dem Fachmann Datenträgerkarten bekannt, die ebenfalls geschichtet aufgebaut sind und somit erfindungsgemäß angepasst werden können. Die vorgeschlagene Datenträgerkarte umfasst einen Datenkörper, der mindestens eine coextrudierte Streifenfolie aufweist. Eine Streifenfolie ist hierbei eine flächig ausgeformte Folie, welche mehrere Bereiche aufweist, die länglich ausgeformt sind. Diese länglich ausgeformten Bereiche, also Streifen, sind abwechselnd, also alternierend, angeordnet, derart, dass ein Streifen aus einem ersten Material auf einen Streifen aus einem zweiten Material folgt, danach folgt wieder der erste Streifen und dann der zweite Streifen. Hierbei können sich die Streifenschichten derart unterscheiden, dass sie zwar aus dem gleichen Material geformt sind, aber unterschiedlich pigmentiert sind. Somit ist es möglich, jeder Streifenschicht eine eigene Farbgebung zuzuordnen.

Da die Streifenschichten alternierend angeordnet sind, überlappen diese sich paarweise und schaffen somit einen Überlappungsbereich, der einen Teil der ersten Streifenschicht und einen Teil der zweiten Streifenschicht betrifft. Dies ist gegenüber dem Stand der Technik besonders vorteilhaft, da nicht lediglich ein fließender Übergang zwischen den beiden Bereichen gegeben ist, sondern vielmehr ein zumindest teilweise überlappender Bereich zwischen den Streifenschichten gegeben ist. Somit ist es erfindungsgemäß möglich, eine erste Streifenschicht in einer ersten Farbe auszugestalten und eine zweite Streifenschicht in einer zweiten Farbe auszugestalten. Somit vermengen sich beide Schichten zumindest optisch derart dass eine Sekundärfarbe entsteht. So ist es beispielsweise möglich, dass die erste Streifenschicht und/oder die zweite Streifenschicht zumindest teilweise transparent bzw. transluzent ausgeformt ist. Auch ohne eine solche Transparenz bzw. Transluzenz ist es jedoch erfindungsgemäß möglich, dass sich die beiden Streifenschichten optisch miteinander vermengen. Dies heißt also, dass nicht zwingendermaßen die Materialien der einzelnen Streifenschichten vermengt werden müssen, sondern vielmehr ergibt sich ein optischer Gesamteindruck aus der Überlagerung, derart, dass beispielsweise eine Sekundärfarbe entsteht. Hierbei kann auch ein Muster bzw. ein Farbverlauf ausgestaltet werden.

Erfindungsgemäß wurde jedoch überraschend auch erkannt, dass, falls eine weitere Streifenschicht hinzugefügt wird, sich jegliche Farbe erzeugen lässt. So sind erfindungsgemäß nicht lediglich zwei Streifenschichten vorgesehen, sondern eben auch eine weitere Streifenschicht, die sich beispielsweise in dem Überlappungsbereich befindet.

Somit ist es besonders vorteilhaft, dass sich die drei Streifenschichten optisch derart vermengen, dass eine gewünschte Farbe entsteht. Beispielsweise kann für die bestimmte Farbe der RGB-Farbraum gewählt werden. Vermengen sich nunmehr die bereitgestellten Streifenschichten in ihrem Überlappungsbereich, so ist es möglich, den Grad der Überlappung derart zu bestimmen, dass ein gewisser Rotanteil, ein gewisser Grünanteil oder ein gewisser Blauanteil vorherrscht. Somit lässt sich der RGB-Farbraum erfindungsgemäß mittels der Streifenschichten erzeugen. Hierbei kann es vorteilhaft sein, dass den Streifenschichten zumindest teilweise transparente bzw. transluzente Anteile beigemischt sind. Hierbei ist es ein Aspekt, dass die einzelnen Streifenschichten in ihrem Zusammenwirken einen gewissen Farbton und/oder ein gewisses Farbmuster ergeben. Dieser Farbton bzw. dieses Farbmuster kann dann als Sicherheitselement bzw. Sicherheitsmerkmal Verwendung finden.

Bezüglich der verschiedenen eingesetzten Streifenschichten ist es insbesondere deshalb gegenüber dem Stand der Technik vorteilhaft, dass nicht lediglich eine erste Streifenschicht und eine zweite Streifenschicht miteinander vermengt werden, sondern vielmehr dass eine weitere Streifenschicht vorgesehen ist. Hierbei wurde erfindungsgemäß erkannt, dass mittels mindestens drei Streifenschichten jeglicher beliebiger Farbwert einstellbar ist. So grenzt sich das vorgeschlagene Sicherheitsmerkmal bzw. das vorgeschlagene Sicherheitselement derart von dem Stand der Technik ab, dass jede beliebige Farbe verwendet werden kann, um das Sicherheitselement bereitzustellen. Gemäß herkömmlicher Verfahren war es nicht möglich, jeden Farbwert bereitzustellen, sondern vielmehr war es lediglich möglich, Sekundärfarbwerte bereitzustellen. Ein Sekundärfarbwert ist hierbei ein Farbwert, der entsteht, wenn zwei unterschiedliche Farben miteinander vermischt werden. Lediglich durch die weitere Streifenschicht ist es erfindungsgemäß möglich, irgendeine Farbgebung zu erzeugen, die spezifikationsgemäß gewünscht ist.

Somit lässt sich nicht nur ein bestimmtes Muster erzeugen, sondern vielmehr kann die Farbgebung derart gewählt werden, dass kein Sekundärwert entsteht. Somit ist es also möglich, das Sicherheitsmerkmal bzw. das Sicherheitselement dadurch zu definieren, dass dies in einer Farbe vorliegt, die keine Sekundärfarbe ist und somit ausschließlich mittels des vorgeschlagenen Verfahrens hergestellt werden kann.

Zwar ist es generell möglich, irgendeine Farbgebung bereitzustellen, dies erfolgt jedoch derart, dass dies eindeutig von der vorgeschlagenen Datenträgerkarte abweicht. So ist es möglich, einen Farbwert derart zu erzeugen, dass ein bestimmtes Muster in einer bestimmten Farbe aufgedruckt wird. Dies lässt sich jedoch erkennen, beispielsweise dadurch, dass die Oberfläche der Datenträgerkarte abgetragen wird. Erfindungsgemäß ist es jedoch so, dass diejenigen Streifenfolien, die verwendet werden, derart geformt sind, dass genau das erfindungsgemäße Streifenschichtenmodell Anwendung findet. Somit ergeben sich Mischfarben bzw. Mischmuster zwischen den einzelnen Streifenschichten derart, dass ein Sicherheitsmerkmal entsteht. Werden beispielsweise Streifenschichten in einer vorgegebenen Farbe eingebracht, so unterscheidet sich dies von dem vorgeschlagenen Datenträgerelement bzw. der Datenträgerkarte dadurch, dass dann die Streifenschichten vollflächig in der voreingestellten Farbe ausgeformt sind. Erfindungsgemäß ist es jedoch erkennbar, dass das Sicherheitsmerkmal dadurch entsteht, dass zwei Streifenschichten miteinander vermengt werden, wobei ferner eine weitere Streifenschicht vorgesehen ist, die ebenfalls vermengt wird. Somit entsteht das Sicherheitsmerkmal erfindungsgemäß bei einem Aufeinanderstoßen von zwei Streifenschichten, wobei auch eine weitere Streifenschicht vorgesehen ist.

Dies ist insbesondere deshalb leicht zu implementieren, da der Kartenkörper typischerweise aus einem Schichtenmodell besteht, dass also Schichten auflaminiert bzw. der Kartenkörper extrudiert wird. Da eine Streifenfolie bereitgestellt werden soll, bietet es sich somit an, die Übergänge zwischen den einzelnen Streifenschichten erfindungsgemäß derart auszugestalten, dass sich diese in ihrer Farbgebung vermischen. Besonders vorteilhaft ist es nunmehr, weiterhin die weitere Streifenschicht vorzusehen, derart, dass eindeutige Sicherheitsmerkmale entstehen.

Ein Sicherheitsmerkmal ist hierbei jegliches Merkmal, welches den vorgeschlagenen Datenträger bzw. die vorgeschlagene Datenträgerkarte von einer weiteren Datenträgerkarte unterscheidet. Beispielsweise kann auch eine Serie von Datenträgerkarten hergestellt werden, welche das Sicherheitsmerkmal aufweisen. Das Sicherheitsmerkmal kann aus unterschiedlichen Farbgebungen der jeweiligen Streifenschichten resultieren, und hierbei ein Muster, einen Farbverlauf, einen Farbton bzw. jegliche optische Erscheinung umfassen. Insbesondere ist es erfindungsgemäß möglich, mittels transparenter Beimischungen in die Streifenschichten einen dreidimensionalen Farbeffekt zu erzeugen.

Gemäß der vorliegenden Erfindung überlappen die alternierend angeordneten benachbarten Streifenschichten sich jeweils paarweise in einem Überlappungsbereich. Dies hat den Vorteil, dass die benachbarten Streifenschichten nicht lediglich fließend nebeneinander angeordnet sind, sondern vielmehr, dass sich die Streifenschichten an ihren anstoßenden Grenzen überlappen. Somit sind optische Merkmale erzeugbar, die wiederum ein Sicherheitsmerkmal darstellen können.

Gemäß der vorliegenden Erfindung ist die mindestens eine weitere Streifenschicht in dem Überlappungsbereich vorgesehen. Dies hat den Vorteil, dass gerade in dem Überlappungsbereich jeglicher Farbton einstellbar ist und somit ein eindeutiges Sicherheitsmerkmal gegeben ist. Somit ist es möglich, die Streifenfolie derart auszugestalten, dass zwar farblich alternierende Streifenschichten vorgesehen werden können, der Überlappungsbereich zwischen den alternierenden Streifenschichten jedoch mittels der weiteren Streifenschicht farblich variiert werden kann.

Gemäß der vorliegenden Erfindung ist die mindestens eine weitere Streifenschicht im Wesentlichen nur in dem Überlappungsbereich vorgesehen. Dies hat den Vorteil, dass die weitere Streifenschicht nicht als eine flächig angeordnete Streifenschicht über den alternierenden Streifenschichten angeordnet wird, sondern vielmehr längs über den Überlappungsbereich gezogen ist. Somit ist es also möglich, erfindungsgemäß lediglich den Überlappungsbereich als ein Sicherheitsmerkmal derart auszugestalten, dass eine Farbgebung vorherrscht, die einem vorbestimmten Farbton entspricht. Hierbei ist es möglich, den Überlappungsbereich derart eng auszugestalten, dass dieser für das menschliche Auge fast nicht erkennbar ist. Somit wird ein möglichst sicherer Überlappungsbereich geschaffen, in dem die drei Streifenschichten bzw. die mindestens drei Streifenschichten vorliegen. Im Wesentlichen heißt hierbei, dass toleranzbedingte Abweichungen generell möglich sein müssen.

Gemäß einem weiteren Aspekt der vorliegenden Erfindung ist der Überlappungsbereich gemäß einer Herstellungsspezifikation einstellbar. Dies hat den Vorteil, dass zum Herstellungsprozess bereits fest vorgebbar ist, wie der Überlappungsbereich ausgestaltet sein soll. Beispielsweise ist anzugeben, wie breit der Überlappungsbereich ist. Das kann einige Millimeter betragen. Somit ist es also möglich, die Ausdehnung des Überlappungsbereichs derart zu spezifizieren, dass ein bestimmtes Sicherheitsmerkmal entsteht. Erfindungsgemäß ist es somit möglich, das Sicherheitsmerkmal nicht lediglich bezüglich dem Farbton bzw. dem Farbmuster zu spezifizieren, sondern vielmehr kann ein Ausmaß des Überlappungsbereichs spezifiziert werden. Das Einstellen des Überlappungsbereichs gemäß einer Herstellungsspezifikation bezieht sich insbesondere auf einen frei wählbaren Überlappungsbereich zum Herstellungszeitpunkt.

Gemäß einem weiteren Aspekt der vorliegenden Erfindung handelt es sich bei der Farbgebung der einzelnen Streifenschichten um jeweils eine Primärfarbe. Dies hat den Vorteil, dass mittels der Primärfarbe jeglicher Farbton gemischt werden kann. Somit ist es beispielsweise möglich, in Abhängigkeit des zugrundeliegenden Farbraums die Anzahl der weiteren Streifenschichten zu wählen. Je nach dein, was als Primärfarbe bezeichnet wird, bzw. die Anzahl der Primärfarben, können Streifenschichten hinzugefügt werden.

Einer der bekanntesten Farbräume ist der sogenannte RGB-Farbraum. Hierzu sind also drei Schichten vorzusehen, welche entsprechend optisch vermengt werden. Hierbei erkennt der Fachmann jedoch auch, dass sich weitere Farbräume erfindungsgemäß umsetzen lassen. Soll beispielsweise ein Farbraum aus vier Grundfarben zusammengesetzt werden können, so ist dies erfindungsgemäß auch möglich, und es sind dementsprechend zwei weitere Streifenschichten vorgesehen. Somit liegen als Sicherheitsmerkmal die Überlappungen der zwei alternierenden Streifenschichten vor, und zusätzlich sind zwei weitere Streifenschichten vorgesehen. Somit können also vier Grundfarben gemischt werden, wobei jede der Streifenschichten eine Grundfarbe bereitstellt. In ihrem Zusammenwirken bzw. in ihrem Mischverhältnis stellen dann die vorgesehenen Streifenschichten den Farbton bereit. Somit lässt sich auch das Sicherheitsmerkmal eindeutig definieren, da erfindungsgemäß jegliche erdenkliche Farbe mittels der unterschiedlichen Streifenschichten hergestellt werden kann. Somit unterscheiden sich das vorgeschlagene Verfahren bzw. der vorgeschlagene Datenträger und die Datenträgerkarte dadurch, dass der gesamte mögliche Farbraum ausgeschöpft werden kann.

Erfindungsgemäß können auch Sekundärfarben von dem Sicherheitsmerkmal ausgenommen werden. Somit ist es zwingend erforderlich, neben den alternierend angeordneten Streifenschichten mindestens eine weitere Streifenschicht vorzusehen, da ansonsten lediglich Sekundärfarben hergestellt werden können.

Gemäß einem weiteren Aspekt der vorliegenden Erfindung ist das Sicherheitsmerkmal in Abhängigkeit einer voreingestellten Farbe gegeben. Dies hat den Vorteil, dass eine gewisse Farbe ausgewählt werden kann, welche nur mittels des erfindungsgemäßen Verfahrens bzw. mittels der erfindungsgemäßen Datenträgerkarte bereitgestellt werden kann. So wird das Sicherheitsmerkmal beispielsweise als ein Überlappungsbereich definiert, der in einem gewissen Farbton vorliegt. Der Farbton kann dann eindeutig gewählt werden, dass dieser eben nur mittels der vorgeschlagenen Streifenschichten herstellbar ist.

Gemäß einem weiteren Aspekt der vorliegenden Erfindung weist das Sicherheitselement mindestens einen Farbverlauf auf. Dies hat den Vorteil, dass als Sicherheitselement bzw. Sicherheitsmerkmal jegliche Farbverläufe dienen können, welche erfindungsgemäß mittels einem Vermengen der Streifenschichten erzeugbar sind. Somit ist es also nicht lediglich möglich, nur einen einzelnen Farbton zu erzeugen, sondern es können diverse Farbtöne erzeugt werden, die ineinander verlaufen. Dies ist insbesondere deshalb vorteilhaft, da die vorgeschlagene Datenträgerkarte hierdurch noch fälschungssicherer wird, da mehrere eindeutige Farbtöne vorgesehen werden können. Ist beispielsweise ein Farbton lediglich durch ein Mischverhältnis von drei Streifenschichten erzeugbar, so kann er nicht mit dem bekannten Verfahren erzeugt werden. Hierzu ist es eben auch möglich, einen weiteren Farbton vorzusehen, der nicht gemäß dem Stand der Technik in dem Überlappungsbereich erzeugt werden kann. Somit sind mehrere eindeutige Farbtöne vorhanden, die das Sicherheitsmerkmal in ihrem Zusammenwirken bereitstellen.

Die Aufgabe wird auch gelöst durch das in Anspruch 6 definierte Verfahren zum Herstellen einer Datenträgerkarte.

Die Aufgabe wird auch gelöst durch das in Anspruch 7 definierte Werkzeug zum Herstellen einer Datenträgerkarte.

Gemäß einem Aspekt der vorliegenden Erfindung weisen die Divisoren jeweils ausgabeseitig zu jeder Streifenschicht einen abgeschrägten Übergangsbereich auf. Dies hat den Vorteil, dass bekannte Einrichtungen Wiederverwendung finden können, und lediglich bei den bekannten Divisoren die Übergangsbereiche abgeschrägt werden müssen. Mittels diesem Abschrägen ist es möglich, mindestens die zwei alternierend angeordneten Streifenschichten derart aneinander zu legen, dass sich diese zumindest teilweise überlappen. Somit wird mit den erfindungsgemäß angepassten Divisoren erreicht, dass ein Übergangsbereich entsteht, und somit die alternierend angeordneten Streifenschichten vermengt werden. Ferner können die Divisoren eingerichtet sein, eine weitere Streifenschicht vorzusehen, die ebenfalls mit den alternierend angeordneten Streifenschichten vermengt wird. Somit wird also eine Mischfarbe erzeugt, bestehend aus den einzelnen Farben der Streifenschichten.

Gemäß einem weiteren Aspekt der vorliegenden Erfindung sind die Übergangsbereiche der Divisoren paarweise zueinander ausgerichtet. Dies hat den Vorteil, dass die Divisoren derart eingerichtet sind, dass sie die Datenträgerkarte bereitstellen können, wie sie bereits vorgeschlagen wurde. Gemäß einem weiteren Aspekt der vorliegenden Erfindung sind die Extrudereinheiten in einem Mehrfachextruder angeordnet. Dies hat den Vorteil, dass bereits bestehende Hardwarekomponenten Wiederverwendung finden können, um das vorgeschlagene Sicherheitsmerkmal zu implementieren bzw. die Datenträgerkarte bereitzustellen. Somit sind beliebig viele Extrudereinheiten vorzusehen, welche alle oder zumindest eine Teilmenge in einem Mehrfachextruder verbaut werden können.

Die Aufgabe wird auch gelöst durch das in Anspruch 11 definierte Verfahren zum Betreiben eines Werkzeugs zur Herstellung einer Datenträgerkarte.

Ferner wird die Aufgabe gelöst durch das in Anspruch 12 definierte Computerprogrammprodukt.

Weitere vorteilhafte Ausgestaltungen werden anhand der beigefügten Figuren erläutert. Es zeigt:
- Fig. 1:: ein Werkzeug zum Herstellen der vorgeschlagenen Datenträgerkarte gemäß einem Aspekt der vorliegenden Erfindung;
- Fig. 2:: ein weiteres Werkzeug zum Herstellen der vorgeschlagenen Datenträgerkarte gemäß einem weiteren Aspekt der vorliegenden Erfindung;
- Fig. 3:: ein weiteres Werkzeug mit Extrudereinheiten gemäß einem Aspekt der vorliegenden Erfindung;
- Fig. 4A:: eine Draufsicht auf ein Werkzeug zum Herstellen einer Datenträgerkarte gemäß einem Aspekt der vorliegenden Erfindung;
- Fig. 4B:: das Werkzeug gemäß Fig. 4A in einer Seitenansicht gemäß dem Aspekt der vorliegenden Erfindung;
- Fig. 5A:: mehrere Divisoren, wie sie in dem vorgeschlagenen Werkzeug Verwendung finden gemäß einem Aspekt der vorliegenden Erfindung; und
- Fig. 5B:: die Divisoren gemäß Fig. 5A in einer Draufsicht gemäß einem Aspekt der vorliegenden Erfindung.

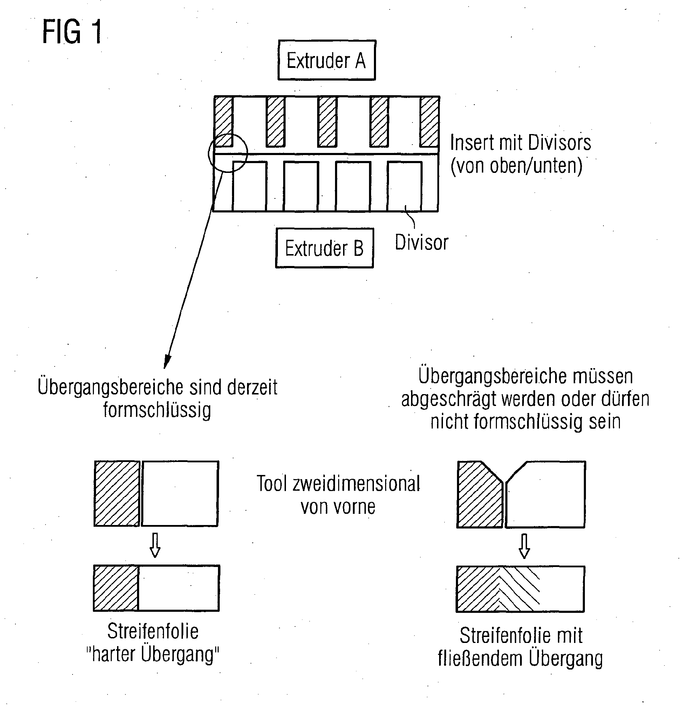

Fig. 1 zeigt ein Werkzeug im oberen Bereich, wie es herkömmlicherweise Verwendung findet. Hierzu sind zwei Extruder vorgesehen, nämlich Extruder A und Extruder B. Diese führen das Rohmaterial sogenannten Divisoren zu. Hierzu sind diejenigen Divisoren, die dem Extruder B zugeordnet sind, unten angeordnet, und Divisoren, welche dem Extruder A zugeordnet sind, sind oben angeordnet. Wie in der vorliegenden Fig. 1 links unten gezeigt ist, ist das Werkzeug, in einer Ansicht von vorne, derart ausgestaltet, dass die Übergangsbereiche formschlüssig ausgestaltet sind. Somit kommt es, wie es der Pfeil anzeigt, zu einer Streifenfolie mit einem sogenannten "harten Übergang". Dies heißt also, dass mit dem herkömmlichen Werkzeug, wie es oben und links gezeigt ist, die Streifenfolien derart erstellt werden, dass die Streifenschichten voneinander getrennt nebeneinander zum Liegen kommen.

Rechts unten ist in der Fig. 1 gezeigt, wie das herkömmliche Werkzeug anzupassen ist, derart, dass zwei Streifenschichten alternierend derart angeordnet werden, dass diese vermengt werden bzw. sich zumindest teilweise überlappen. Hierzu ist an der jeweiligen Einkerbung zu erkennen, dass die Übergangsbereiche abgeschrägt werden müssen. Sie sollen also nicht formschlüssig sein, wie es herkömmlich durchgeführt wird. Hierdurch entsteht eine Streifenfolie mit einem sogenannten "fließenden Übergang", also einem Vermengen der Streifenschichten, was den angezeigten Farbverlauf erzeugt.

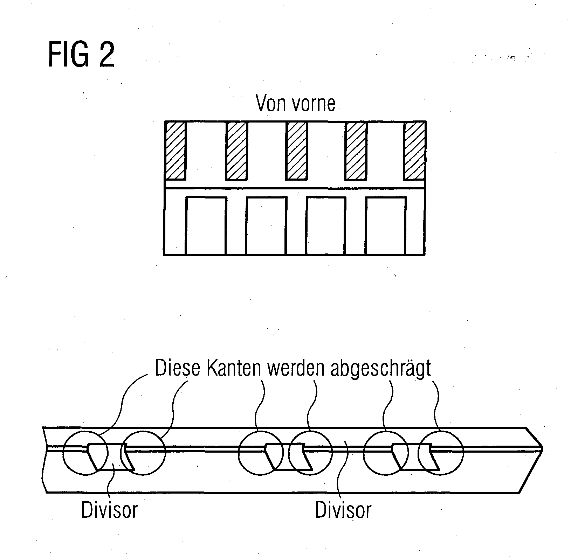

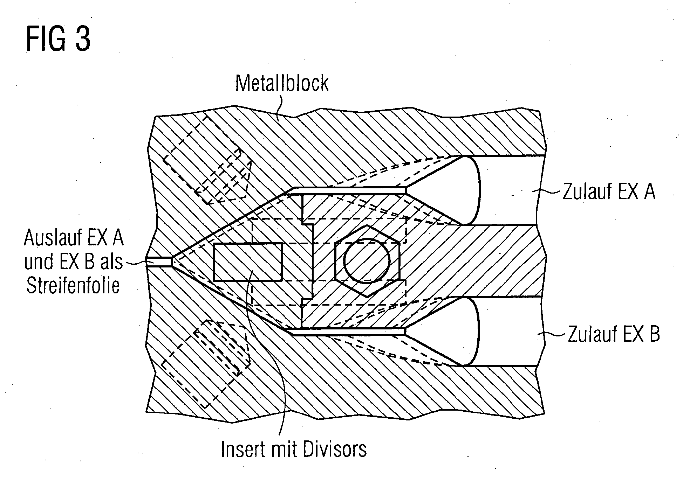

Fig. 2 zeigt wiederum in dem oberen Bereich den herkömmlichen Divisor bzw. die Divisoren, welche den Extrudern zugeordnet sind. Ferner ist in dem unteren Bereich ein Bauelement angeordnet, wobei mittels der Kreise angedeutet wird, welche Kanten abgeschrägt werden müssen. Dieses Bauelement findet beispielsweise Anwendung in einem Werkzeug wie es in Fig. 3 gezeigt ist.

Fig. 3 zeigt hierzu ein Werkzeug, welches einen ersten Zulauf eines Extruders A aufweist und einen zweiten Zulauf eines Extruders B. Dies ist vorliegend an der rechten Seite der Fig. 3 eingezeichnet. Auf der linken Seite entsteht die Streifenfolie, bei der der Zulauf des Extruders A und der Zulauf des Extruders B mittig links vereint werden. Auf diese Art und Weise kann ein erhitztes Rohmaterial bzw. jeweils ein erhitztes Rohmaterial, zu einer einzigen Streifenfolie vermengt und verschmolzen werden. Somit ist es in Fig. 3 vorgesehen, dass die Rohstoffe dem Werkzeug von rechts zugefügt werden, während das Endprodukt, nämlich die Streifenfolie, zur Verwendung in der Datenträgerkarte links erzeugt wird.

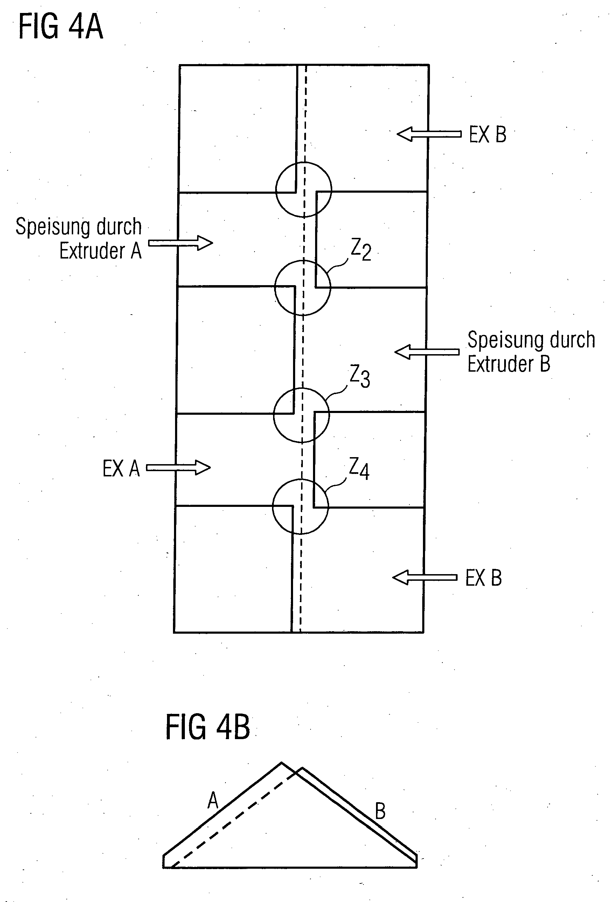

In Fig. 4A sind wiederum die mehreren Divisoren gezeigt und die entsprechenden Übergangsbereiche, welche mittels Kreisen gekennzeichnet sind. Somit stellen diese Kreise keine strukturellen Merkmale dar, sondern kennzeichnen lediglich diejenigen Bereiche der Divisoren, welche erfindungsgemäß anzupassen sind. Vorliegend sind gemäß einem herkömmlichen Werkzeug Kanten mit den Kreisen markiert, welche erfindungsgemäß derart angepasst werden müssen, dass diese abgeschrägt sind. Fig. 4B zeigt die Divisoren in einer Seitenansicht, und zeigt insbesondere, dass die Divisoren versetzt angeordnet sind.

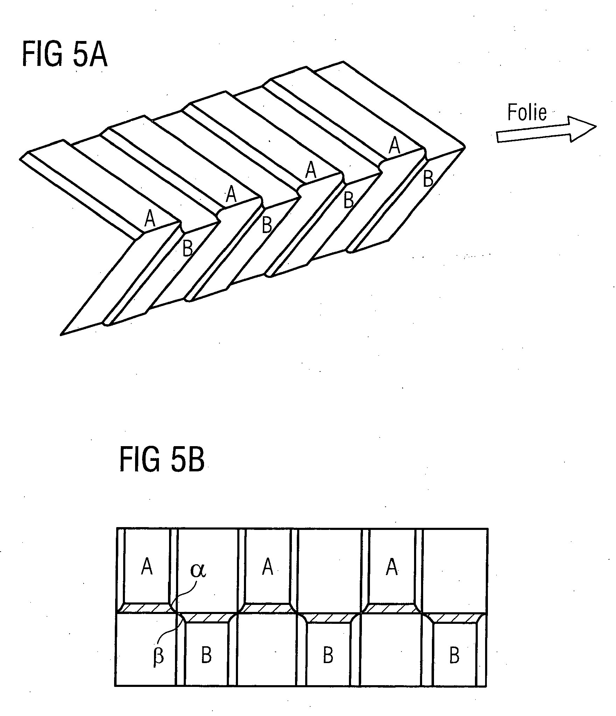

Fig. 5A zeigt die erfindungsgemäßen Divisoren A, B, welche in einem sogenannten Insert angeordnet sind. Jeder Divisor ist hierbei ausgabeseitig zu jedem Folienstreifen mit abgeschrägten Übergangsbereichen ausgebildet, wobei die abgeschrägten Übergangsbereiche zueinander ausgerichtet sind. Somit wird das Ausgangsmaterial von links herangeführt, und wie in dem Fall gekennzeichnet ist, entsteht auf der rechten Seite die Streifenfolie. Hierbei können die gezeigten Komponenten derart angepasst werden, dass auch eine weitere Streifenschicht vorzusehen ist.

Fig. 5B zeigt in einer Draufsicht die in Fig. 5A, B und zeigt insbesondere die abgeschrägten Divisoren in der Mitte der vorliegenden Fig. 5B. Hierzu können beispielsweise ein oder mehrere Winkel eingestellt werden, die dann den Grad der Überlappung bzw. des Übergangs zwischen den beiden alternierenden Streifenschichten definieren. Vorliegend sind diese Winkel als α und β eingezeichnet. Somit lässt sich also variieren, wie die Streifenschichten vermengt werden.

## Patentansprüche

1. Datenträgerkarte umfassend einen Kartenkörper aus mindestens einer coextrudierten Streifenfolie, welche aus alternierend angeordneten Streifenschichten geformt ist, wobei sich die alternierend angeordneten Streifenschichten mit mindestens einer weiteren Streifenschicht derart vermengen, dass durch eine jeweils unterschiedliche Farbgebung der einzelnen Streifenschichten ein Sicherheitsmerkmal gegeben ist,
wobei die alternierend angeordneten benachbarten Streifenschichten sich jeweils paarweise in einem Überlappungsbereich überlappen,
wobei die mindestens eine weitere Streifenschicht in dem Überlappungsbereich vorgesehen ist,
wobei die mindestens eine weitere Streifenschicht im Wesentlichen nur in dem Überlappungsbereich vorgesehen ist.

2. Datenträgerkarte nach Anspruch 1, **dadurch gekennzeichnet, dass** der Überlappungsbereich gemäß einer Herstellungsspezifikation einstellbar ist.

3. Datenträgerkarte nach einem der vorhergehenden Ansprüche, **dadurch gekennzeichnet, dass** es sich bei der Farbgebung der einzelnen Streifenschichten um jeweils eine Primärfarbe handelt.

4. Datenträgerkarte nach einem der vorhergehenden Ansprüche, **dadurch gekennzeichnet, dass** das Sicherheitsmerkmal in Abhängigkeit einer voreingestellten Farbe gegeben ist.

5. Datenträgerkarte nach einem der vorhergehenden Ansprüche, **dadurch gekennzeichnet, dass** Sicherheitsmerkmal mindestens einen Farbverlauf aufweist.

6. Verfahren zum Herstellen einer Datenträgerkarte gemäß den Ansprüchen 1 bis 5, mit:
- Formen mindestens einer coextrudierten Streifenfolie aus alternierend angeordneten Streifenschichten, wobei
- die alternierend angeordneten Streifenschichten mit mindestens einer weiteren Streifenschicht derart vermengt werden, dass durch eine jeweils unterschiedliche Farbgebung der einzelnen Streifenschichten ein Sicherheitsmerkmal gegeben wird,
wobei die alternierend angeordneten benachbarten Streifenschichten sich jeweils paarweise in einem Überlappungsbereich überlappen,
wobei die mindestens eine weitere Streifenschicht in dem Überlappungsbereich vorgesehen ist,
wobei die mindestens eine weitere Streifenschicht im Wesentlichen nur in dem Überlappungsbereich vorgesehen ist.

7. Werkzeug zum Herstellen einer Datenträgerkarte gemäß den Ansprüchen 1 bis 5, mit:
- mehreren Extrudereinheiten eingerichtet zum Formen mindestens einer coextrudierten Streifenfolie aus alternierend angeordneten Streifenschichten, wobei
- Divisoren vorgesehen sind, welche eingerichtet sind, dass die sich alternierend angeordneten Streifenschichten mit mindestens einer weiteren Streifenschicht derart vermengen, dass durch eine jeweils unterschiedliche Farbgebung der einzelnen Streifenschichten ein Sicherheitsmerkmal gegeben ist, wobei die alternierend angeordneten benachbarten Streifenschichten sich jeweils paarweise in einem Überlappungsbereich überlappen,
wobei die mindestens eine weitere Streifenschicht in dem Überlappungsbereich vorgesehen ist,
wobei die mindestens eine weitere Streifenschicht im Wesentlichen nur in dem Überlappungsbereich vorgesehen ist.

8. Werkzeug nach Anspruch 7, **dadurch gekennzeichnet, dass** die Divisoren jeweils ausgabeseitig zu jeder Streifenschicht einen abgeschrägten Übergangsbereich aufweisen.

9. Werkzeug nach Anspruch 8, **dadurch gekennzeichnet, dass** die Übergangsbereiche der Divisoren paarweise zueinander ausgerichtet sind.

10. Werkzeug nach einem der Ansprüche 7 bis 9, **dadurch gekennzeichnet, dass** die Extrudereinheiten in einem Mehrfachextruder angeordnet sind.

11. Verfahren zum Betreiben eines Werkzeugs zur Herstellung einer Datenträgerkarte gemäß den Ansprüchen 1 bis 5, mit:
- Formen mindestens einer coextrudierten Streifenfolie aus alternierend angeordneten Streifenschichten, wobei
- die alternierend angeordneten Streifenschichten mit mindestens einer weiteren Streifenschicht derart vermengt werden, dass durch eine jeweils unterschiedliche Farbgebung der einzelnen Streifenschichten ein Sicherheitsmerkmal gegeben wird,
wobei die alternierend angeordneten benachbarten Streifenschichten sich jeweils paarweise in einem Überlappungsbereich überlappen,
wobei die mindestens eine weitere Streifenschicht in dem Überlappungsbereich vorgesehen ist,
wobei die mindestens eine weitere Streifenschicht im Wesentlichen nur in dem Überlappungsbereich vorgesehen ist.

12. Computerprogrammprodukt mit Steuerbefehlen, welche das Verfahren gemäß dem Anspruch 11 zum Betreiben eines Werkzeugs gemäß dem Anspruch 7 implementieren.

## Claims

1. A data carrier card comprising a card body of at least one coextruded strip foil which is shaped from alternatingly arranged strip layers, wherein the alternatingly arranged strip layers mix with at least one further strip layer such that a security feature is given by a respectively different coloration of the individual strip layers, wherein the alternatingly arranged adjacent strip layers mutually overlap respectively pairwise in an overlap region,
wherein the at least one further strip layer is provided in the overlap region, wherein the at least one further strip layer is provided substantially only in the overlap region.

2. The data carrier card according to claim 1, **characterized in that** the overlap region is adjustable according to a manufacture specification.

3. The data carrier card according to any of the previous claims, **characterized in that** the coloration of the individual strip layers is respectively a primary color.

4. The data carrier card according to any of the previous claims, **characterized in that** the security feature is given in dependence on a preset color.

5. The data carrier card according to any of the previous claims, **characterized in that** the security feature has at least one color gradation.

6. A method for manufacturing a data carrier card according to the claims 1 to 5, with:
- shaping at least one coextruded strip foil from alternatingly arranged strip layers, wherein
- the alternatingly arranged strip layers are being mixed with at least one further strip layer, such that a security feature is being given by a respectively different coloration of the individual strip layers, wherein the alternatingly arranged adjacent strip layers mutually overlap respectively pairwise in an overlap region, wherein the at least one further strip layer is provided in the overlap region, wherein the at least one further strip layer is provided substantially only in the overlap region.

7. A tool for manufacturing a data carrier card according to the claims 1 to 5, with:
- several extruder units devised for shaping at least one coextruded strip foil from alternatingly arranged strip layers, wherein
- divisors are provided which are devised that the alternatingly arranged strip layers mix with at least one further strip layer, such that a security feature is given by a respectively different coloration of the individual strip layers, wherein the alternatingly arranged adjacent strip layers mutually overlap respectively pairwise in an overlap region,
wherein the at least one further strip layer is provided in the overlap region, wherein the at least one further strip layer is provided substantially only in the overlap region.

8. A tool according to claim 7, **characterized in that** the divisors respectively on the output side have a beveled transition region to every strip layer.

9. The tool according to claim 8, **characterized in that** the transition regions of the divisors are aligned pairwise to each other.

10. The tool according to any of claims 7 to 9, **characterized in that** the extruder units are arranged in a multiple extruder.

11. A method for operating a tool for manufacturing a data carrier card according to the claims 1 to 5, with:
- shaping at least one coextruded strip foil from alternatingly arranged strip layers, wherein
- the alternatingly arranged strip layers are being mixed with at least one further strip layer, such that a security feature is being given by a respectively different coloration of the individual strip layers, wherein the alternatingly arranged adjacent strip layers mutually overlap respectively pairwise in an overlap region, wherein the at least one further strip layer is provided in the overlap region,
wherein the at least one further strip layer is provided substantially only in the overlap region.

12. A computer program product having control commands which implement the method according to the claim 11 for operating a tool according to claim 7.

## Revendications

1. Carte support de données comprenant un corps de carte en au moins une feuille en rubans coextrudée formée de couches de ruban agencées en alternance, cependant que les couches de ruban agencées en alternance se mêlent de telle façon à au moins une autre couche de ruban que, par une coloration respectivement différente des couches de ruban individuelles, une caractéristique de sécurité est obtenue,
cependant que les couches de ruban adjacentes agencées en alternance se chevauchent respectivement par paires dans une zone de chevauchement,
cependant que la au moins une autre couche de ruban est prévue dans la zone de chevauchement, cependant que la au moins une autre couche de ruban est prévue essentiellement uniquement dans la zone de chevauchement.

2. Carte support de données selon la revendication 1, **caractérisée en ce que** la zone de chevauchement peut être modulée conformément à une spécification de fabrication.

3. Carte support de données selon une des revendications précédentes, **caractérisée en ce que** la coloration des couches de ruban individuelles consiste en respectivement une couleur primaire.

4. Carte support de données selon une des revendications précédentes, **caractérisée en ce que** la caractéristique de sécurité est obtenue en fonction d'une couleur pré-modulée.

5. Carte support de données selon une des revendications précédentes, **caractérisée en ce que** la caractéristique de sécurité présente au moins un dégradé de couleur.

6. Procédé de fabrication d'une carte support de données conformément aux revendications de 1 à 5, comprenant :
- formage d'au moins une feuille en rubans coextrudée formée de couches de ruban agencées en alternance, cependant que
- les couches de ruban agencées en alternance sont mêlées de telle façon à au moins une autre couche de ruban que, par une coloration respectivement différente des couches de ruban individuelles, une caractéristique de sécurité est obtenue,
cependant que les couches de ruban adjacentes agencées en alternance se chevauchent respectivement par paires dans une zone de chevauchement,
cependant que la au moins une autre couche de ruban est prévue dans la zone de chevauchement, cependant que la au moins une autre couche de ruban est prévue essentiellement uniquement dans la zone de chevauchement.

7. Outil pour la fabrication d'une carte support de données conformément aux revendications de 1 à 5, comprenant :
- plusieurs unités d'extrusion conçues pour former au moins une feuille en rubans coextrudée formée de couches de ruban agencées en alternance, cependant que
- des diviseurs sont prévus, lesquels sont conçus pour que les couches de ruban agencées en alternance se mêlent de telle façon à au moins une autre couche de ruban que, par une coloration respectivement différente des couches de ruban individuelles, une caractéristique de sécurité est obtenue, cependant que les couches de ruban adjacentes agencées en alternance se chevauchent respectivement par paires dans une zone de chevauchement,
cependant que la au moins une autre couche de ruban est prévue dans la zone de chevauchement, cependant que la au moins une autre couche de ruban est prévue essentiellement uniquement dans la zone de chevauchement.

8. Outil selon la revendication 7, **caractérisé en ce que** les diviseurs comportent respectivement côté sortie à chaque couche de ruban une zone de transition biseautée.

9. Outil selon la revendication 8, **caractérisé en ce que** les zones de transition des diviseurs sont orientées par paires les unes vers les autres.

10. Outil selon au moins une des revendications de 7 à 9, **caractérisé en ce que** les unités d'extrusion sont agencées dans une extrudeuse multiple.

11. Procédé d'actionnement d'un outil pour la fabrication d'une carte support de données conformément aux revendications de 1 à 5, comprenant :
- formage d' au moins une feuille en rubans coextrudée formée de couches de ruban agencées en alternance, cependant que
- les couches de ruban agencées en alternance sont mêlées de telle façon à au moins une autre couche de ruban que, par une coloration respectivement différente des couches de ruban individuelles, une caractéristique de sécurité est obtenue,
cependant que les couches de ruban adjacentes agencées en alternance se chevauchent respectivement par paires dans une zone de chevauchement,
cependant que la au moins une autre couche de ruban est prévue dans la zone de chevauchement, cependant que la au moins une autre couche de ruban est prévue essentiellement uniquement dans la zone de chevauchement.

12. Produit programme d'ordinateur doté d'instructions de commande qui mettent en œuvre le procédé conformément à la revendication 11 pour l'actionnement d'un outil conforme à la revendication 7.
